(19) Europäisches Patentamt
European Patent Office
Office européen des brevets

(11) EP 4 629 424 A1

(12) EUROPEAN PATENT APPLICATION

(43) Date of publication:
**08.10.2025 Bulletin 2025/41**

(21) Application number: **25168304.1**

(22) Date of filing: **03.04.2025**

(51) International Patent Classification (IPC):
***H01M 50/42*** *(2021.01)* ***C08F 220/06*** *(2006.01)*
***C08K 3/00*** *(2018.01)* ***C09D 7/61*** *(2018.01)*
***H01M 50/434*** *(2021.01)* ***H01M 50/443*** *(2021.01)*
***H01M 50/451*** *(2021.01)* *H01M 10/0525* *(2010.01)*

(52) Cooperative Patent Classification (CPC):
**H01M 50/451; C08F 220/06; C08K 3/00; C09D 7/61; H01M 50/42; H01M 50/434; H01M 50/443;** H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.04.2024 KR 20240045101**

(71) Applicant: **SAMSUNG SDI CO., LTD.**
**Yongin-si, Gyeonggi-do 17084 (KR)**

(72) Inventors:
- **Choi, Hyeon Seon**
  **16678 Suwon-si, Gyeonggi-do (KR)**
- **Lee, Jung Seong**
  **16678 Suwon-si, Gyeonggi-do (KR)**
- **Seo, Dong Wan**
  **16678 Suwon-si, Gyeonggi-do (KR)**
- **Kim, Nam Ju**
  **16678 Suwon-si, Gyeonggi-do (KR)**
- **Lee, Yeon Ho**
  **16678 Suwon-si, Gyeonggi-do (KR)**
- **Lee, Chan Kyu**
  **16678 Suwon-si, Gyeonggi-do (KR)**
- **Jo, Jung Mo**
  **16678 Suwon-si, Gyeonggi-do (KR)**
- **Kim, Hye Mi**
  **16678 Suwon-si, Gyeonggi-do (KR)**
- **Han, Byong Joon**
  **16678 Suwon-si, Gyeonggi-do (KR)**
- **Lee, Jae Yeon**
  **16678 Suwon-si, Gyeonggi-do (KR)**
- **Lee, Woo Sung**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) SEPARATOR FOR RECHARGEABLE LITHIUM BATTERY AND RECHARGEABLE LITHIUM BATTERY INCLUDING THE SAME

(57) The present disclosure relates to a separator for a rechargeable lithium battery, and a rechargeable lithium battery including the separator, and the separata porous substrate and a coating layer located on at least one surface of the porous substrate. The coating layer includes a heat-resistant layer including a binder and a filler, and an adhesive layer located on the heat-resistant layer and including an adhesive binder. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler includes a filler having a particle diameter D50 ranging from 250 nm to 350 nm, and the adhesive binder includes a cross-linked (meth)acryl-based adhesive binder.

FIG 1.

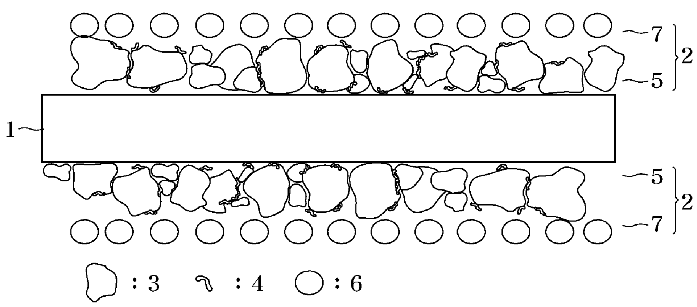


EP 4 629 424 A1

## Description

BACKGROUND

### 1. Field of the Disclosure

Examples of the present disclosure relate to a separator for a rechargeable lithium battery, and a rechargeable lithium battery including the separator.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries may be advantageous.
A rechargeable lithium battery is typically a battery that includes a positive electrode and a negative electrode that include an active material capable of the intercalation and deintercalation of lithium ions, and the rechargeable lithium battery produces electrical energy by oxidation and reduction reactions when the lithium ions are intercalated into and deintercalated from the positive electrode and the negative electrode.
The rechargeable lithium battery may further include a separator between the positive electrode and the negative electrode. The separator may have low membrane resistance, high heat resistance, resulting in low heat shrinkage.

SUMMARY

The invention is defined by the appended claims. The description that follows is subjected to this limitation. Any disclosure lying outside the scope of said claims is only intended for illustrative as well as comparative purposes.
One example embodiment includes a separator for a rechargeable lithium battery that increases the capacity of a rechargeable lithium battery by having a low membrane resistance.
Another example embodiment includes a separator for rechargeable lithium battery that increases the stability and lifetime of a rechargeable lithium battery by having a low heat shrinkage rate and desired or improved air permeability.
Still another example embodiment includes a rechargeable lithium battery including the above separator.
Example embodiments include a separator for a rechargeable lithium battery.
The separator for a rechargeable lithium battery includes a porous substrate and a coating layer located on at least one surface of the porous substrate, wherein the coating layer includes a heat-resistant layer including a binder and a filler, and an adhesive layer located on the heat-resistant layer and including an adhesive binder. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof, the filler includes a filler having a particle diameter D50 ranging from 250 nm to 350 nm, and the adhesive binder includes a cross-linked (meth)acryl-based adhesive binder.
Example embodiments include a rechargeable lithium battery.
The rechargeable lithium battery includes a positive electrode, a negative electrode, and a separator for a rechargeable lithium battery, the separator being located between the positive electrode and the negative electrode.

BRIEF DESCRIPTION OF THE DRAWINGS

FIG. 1 is a cross-sectional view illustrating a separator for a rechargeable lithium battery, according to one example embodiment.
FIGS. 2 to 5 are schematic cross-sectional views illustrating a rechargeable lithium battery, according to one example embodiment.

DETAILED DESCRIPTION

Hereinafter, example embodiments of the present disclosure are described in detail. However, the embodiments are presented as examples, the present disclosure is not limited thereto, and the present disclosure is only defined by the scope of the appended claims.
Unless otherwise stated herein, when a part such as a layer, a membrane, an area, a plate, etc. is described as being disposed "on" another part, it indicates not only a case where the part is "directly on" another part, but also a case

where there are other parts therebetween.

Unless otherwise stated herein, the singular may also include the plural.

Unless otherwise defined herein, a particle diameter is an average particle diameter. In addition, the particle diameter refers to an average particle diameter D50, which refers to a diameter of a particle with a cumulative volume of 50% by volume in a particle diameter distribution. The average particle diameter D50 may be measured by methods known to those skilled in the art and for example, may be measured using a particle size analyzer, a transmission electron microscope photograph, or a scanning electron microscope photograph. As another method, the average particle diameter D50 may be obtained by measuring the particle diameter using a measuring device using dynamic light scattering, performing data analysis to count the number of particles for each particle size range, and calculating the average particle diameter D50 therefrom. Alternatively, the average particle diameter D50 may be measured using a laser diffraction method. When measuring the average particle diameter by the laser diffraction method, for example, the average particle diameter D50 based on 50% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W.

In the present specification, "(meth)acryl" refers to acryl and/or methacryl.

Hereinafter, unless otherwise defined, "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, at least one of a C3 to C10 cycloalkylene group or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less ($X\leq$ and $\leq Y$)."

A separator for a rechargeable lithium battery includes a porous substrate and a coating layer located on at least one surface of the porous substrate, wherein the coating layer includes a heat-resistant layer including a binder and a filler, and an adhesive layer located on the heat-resistant layer and including an adhesive binder. The binder includes a (meth) acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The filler includes a filler having a particle diameter D50 ranging from 250 nm to 350 nm measured by a laser diffraction method, and the adhesive binder includes a cross-linked (meth)acryl-based adhesive binder.

The separator for a rechargeable lithium battery including the coating layer can have high heat resistance, low membrane resistance, and desired or improved air permeability. In particular, the coating layer may include an adhesive layer including a cross-linked (meth)acryl-based adhesive binder as an adhesive binder and by including the heat-resistant layer, a separator having a low heat shrinkage rate, low membrane resistance, and desired or improved air permeability can be provided. As such, the capacity, lifetime, and stability of a rechargeable lithium battery can be increased.

According to one example embodiment, the separator may have a membrane resistance of 1Ω or less, for example, more than 0 Ω and 1 Ω or less. The membrane resistance may be measured by a method to be described below.

According to one example embodiment, the separator may have air permeability of less than 200 sec/100 cc, for example, 190 sec/100 cc or less, or 180 sec/100 cc or less. That is, the separator may have an air permeability of less than 40 sec/100 cc·1 μm per unit thickness, for example, 30 sec/100 cc·1 μm or less or 25 sec/100 cc·1 μm or less. Here, the air permeability refers to the time (seconds) it takes for 100 cc of air to pass through the unit thickness of the separator. The air permeability per unit thickness may be obtained by measuring the air permeability for the total thickness of the separator, and dividing the air permeability by the total thickness of the separator. The air permeability may be obtained by measuring the time it takes for 100 cc of air to pass through the separator using an air permeability measurement device (EG01-55-1MR, Asahi Seiko Co., Ltd.).

According to one example embodiment, the separator may have a heat shrinkage rate of 5% or less, for example, ranging from 0 to 5%. Within the above range, since the heat resistance of the separator is high, the lifetime and stability of the battery can be increased. The heat shrinkage rate may be measured by a method to be described below.

## Coating layer

The coating layer includes a binder, and the binder may include a (meth)acryl-based binder below in an amount of 95 wt% or more, for example, ranging from 95 to 100 wt% or 100 wt%.

The (meth)acryl-based binder may fix a filler on a porous substrate, allow the coating layer to be bonded to the porous substrate and an electrode, and contribute to increasing the heat resistance, air permeability, and oxidation resistance of a separator. In addition, the (meth)acryl-based binder can facilitate the movement of lithium ions to reduce membrane resistance and increase ionic conductivity, improve the adhesion of the coating layer to the porous substrate and the electrode, and improve the dispersibility of the filler in the coating layer.

With respect to 100 mol% of the (meth)acryl-based binder, a total of the first structural unit, the second structural unit, and the third structural unit may be 95 mol% or more, for example, may range from 95 mol% to 100 mol%, or for example, may be 100 mol%. Within the above range, the above effects of the separator can be readily achieved.

The first structural unit may be derived from (meth)acrylic acid, (meth)acrylate, or a salt thereof and may be configured to fix the filler on the porous substrate, and provide bonding strength so that the coating layer is bonded to the porous substrate and the electrode and contribute to increasing the heat resistance and air permeability of the separator. In addition, the first structural unit may have a carboxyl functional group (-C(=O)O-) in the structural unit, thereby improving the dispersibility of a coating slurry.

The first structural unit may be represented by any one of Chemical Formulas 1 to 3 below:

Chemical Formula 1:

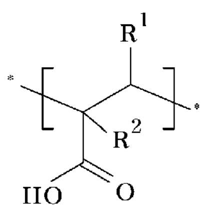

Chemical Formula 2:

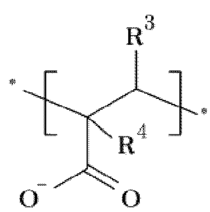

Chemical Formula 3:

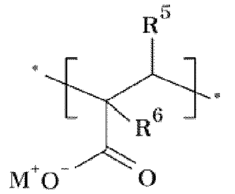

With respect to 100 mol% of the binder for a rechargeable lithium battery, the first structural unit may be contained in an amount ranging from about 30 mol% to about 65 mol% or from 30 mol% to 60 mol%, from 30 mol% to 50 mol% or from 30 mol% to 45 mol% or from 30 mol% to 40 mol%. When the first structural unit is included in the above range, the separator may exhibit desired or improved bonding strength to the porous substrate and the electrode, heat resistance, air permeability, and oxidation resistance.

According to one example embodiment, the first structural unit may include the structural unit represented by Chemical Formula 2 and the structural unit represented by Chemical Formula 3, and in this case, the structural unit represented by Chemical Formula 2 and the structural unit represented by Chemical Formula 3 may be included in a molar ratio of 10:1 to 1:2, 10:1 to 1:1, or 5:1 to 1:1.

According to another example embodiment, the first structural unit may include only the structural unit represented by Chemical Formula 2.

The second structural unit may be derived from hydroxyalkyl (meth)acrylate and may be configured to fix the filler on the porous substrate, and provide bonding strength so that the coating layer is bonded to the porous substrate and the electrode. In addition, the second structural unit may have a carboxyl functional group (-C(=O)O-) in the structural unit,

thereby improving the dispersibility of a coating slurry.

The second structural unit may be represented by Chemical Formula 4 below:

Chemical Formula 4:

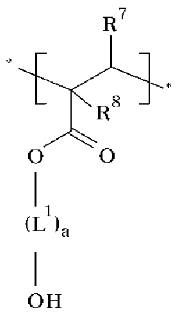

With respect to 100 mol% of the binder for a rechargeable lithium battery, the second structural unit may be contained in an amount ranging from 1 mol% to 20 mol% or from 5 mol% to 15 mol%. Within the above range, the bonding strength of the coating layer to the porous substrate and the electrode can be readily increased.

The second structural unit may be or include, for example, a structural unit derived from hydroxyalkyl (meth) acrylate. Here, the alkyl may be at least one of a C1 to C20 alkyl, a C1 to C10 alkyl, or a C1 to C6 alkyl.

The hydroxyalkyl (meth)acrylate may include, for example, one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from (meth)acrylamido sulfonic acid or a salt thereof can reduce the membrane resistance of the separator by increasing the possibility of lithium ion movement in the presence of the first structural unit and the second structural unit.

The third structural unit may include a bulky functional group derived from (meth)acrylamido sulfonic acid or a salt thereof, thereby enhancing the heat resistance of the separator by the effect of increasing a glass transition temperature. Additionally, when the third structural unit includes a functional group derived from a salt of (meth)acrylamido sulfonic acid, a metal (M) may be moved through the third structural unit by the sulfonic acid functional group in which the metal (M) is substituted, thereby reducing membrane resistance.

The third structural unit may be represented by at least one of Chemical Formula 5, 6, 7 below, or a combination thereof:

Chemical Formula 5: Chemical Formula 6: Chemical Formula 7:

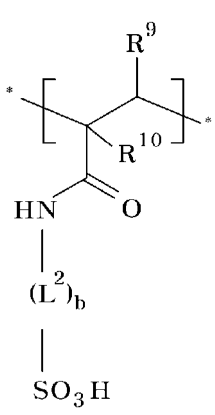

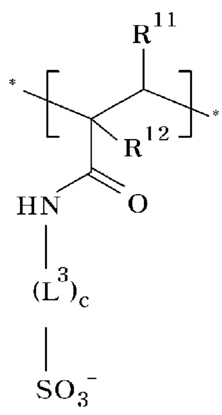

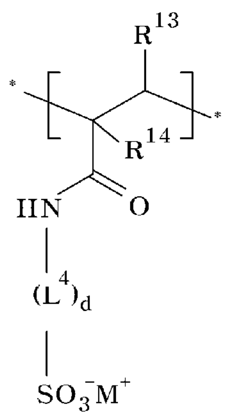

The third structural unit may include only any one or two or more of the structural unit represented by Chemical Formula 5, the structural unit represented by Chemical Formula 6, and the structural unit represented by Chemical Formula 7. As an example, the third structural unit may include the structural unit represented by Chemical Formula 6, and as another example, the third structural unit may include the structural unit represented by Chemical Formula 6 and the structural unit represented by Chemical Formula 7.

The third structural unit may be or include, for example, a structural unit derived from (meth)acrylamido alkane sulfonic acid or a salt thereof. Here, the alkane may be at least one of a C1 to C20 alkane, a C1 to C10 alkane, or a C1 to C6 alkane, and the alkyl may be at least one of a C1 to C20 alkyl, a C1 to C10 alkyl, or a C1 to C6 alkyl. The salt is a salt composed of the above-described sulfonic acid and a desired ion. The ion may be or include, for example, an alkali metal ion, and in this case, the salt may be an alkali metal salt of sulfonic acid.

For example, the (meth)acrylamido alkane sulfonic acid may be 2-(meth)acrylamido-2-methylpropane sulfonic acid.

The third structural unit may be contained in an amount ranging from 20 mol% to 65 mol%, for example, from 30 mol% to 60 mol%, about 40 mol% to about 60 mol% of the (meth)acryl-based binder. When the third structural unit is included within the above range, the (meth)acryl-based binder and the separator including the same may exhibit significantly low membrane resistance.

Descriptions of Chemical Formulas 1 to 7 are as follows.

$R^1$ to $R^{14}$ each independently is hydrogen or a C1 to C10 alkyl group. For example, $R^1$ to $R^7$ and $R^9$ to $R^{14}$ may each behydrogen or a methyl group, and $R^8$ may be a methyl group.

$L^1$ to $L^4$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be at least one of a methylene group or an ethylene group, and $L^2$ to $L^4$ may each be independently $*\text{-}C(CH_3)_2\text{-}CH_2\text{-}*$.

a, b, c, and d are each independently an integer ranging from 0 to 2. For example, a, b, c, and d may all be equal to 1.

M is an alkali metal, and the alkali metal may be at least one of lithium, sodium, potassium, rubidium, or cesium. For example, M may be lithium or sodium.

Representative examples of the binder for a rechargeable lithium battery according to one example embodiment are as follows:

Chemical Formula 8:

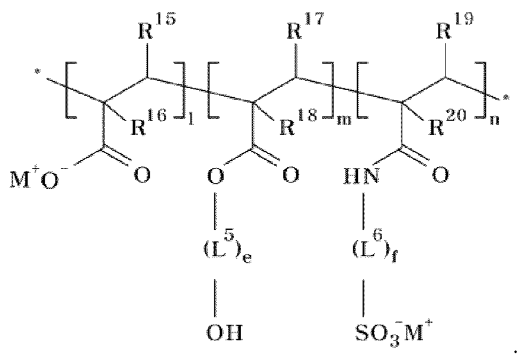

Description of Chemical Formula 8 is as follows.

$R^{15}$ to $R^{20}$ are each independently hydrogen or a C1 to C10 alkyl group. For example, $R^{15}$ to $R^{17}$, $R^{19}$, and $R^{20}$ may each be hydrogen or a methyl group, and $R^{18}$ may be a methyl group.

$L^5$ and $L^6$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be at least one of a methylene group or an ethylene group, and $L^6$ may be $*\text{-}C(CH_3)_2\text{-}CH_2\text{-}*$.

e and f may each be independently an integer ranging from 0 to 2. For example, e and f may all be equal to 1.

M is an alkali metal, and the alkali metal may be at least one of lithium, sodium, potassium, rubidium, or cesium. For example, M may be lithium or sodium.

l, m, and n are a molar ratio of each unit, and l+m+n=1. For example, l, m, and n may satisfy $0.3 \le l \le 0.65$, $0.01 \le m \le 0.2$, and $0.2 \le n \le 0.65$, or may be $0.3 \le l \le 0.6$, $0.05 \le m \le 0.15$, and $0.3 \le n \le 0.6$.

The (meth)acryl-based binder may include an alkali metal. The alkali metal may be present in the form of a cation and for example, may be at least one of lithium, sodium, potassium, rubidium, or cesium. For example, the alkali metal may be combined with the (meth)acryl-based binder and may be present in the form of a salt. The alkali metal may assist in the synthesis of the (meth)acryl-based binder in an aqueous solvent, increase the bonding strength of the coating layer, and increase the heat resistance, air permeability, oxidation resistance, and the like, of the separator.

The alkali metal may be contained in an amount ranging from 1 wt% to 40 wt%, for example, from 1 wt% to 30 wt%,

from 1 wt% to 20 wt%, or from 10 wt% to 20 wt% of the alkali metal and the (meth)acryl-based binder. For example, the (meth)acryl-based binder and the alkali metal may be included in a weight ratio of 99:1 to 60:40, a weight ratio of 99:1 to 70:30, for example, a weight ratio of 99:1 to 80:20, for example, a weight ratio of 90:10 to 80:20.

The alkali metal may be contained in an amount ranging from 0.1 mol% to 1.0 mol% of the total content of the alkali metal and the (meth)acryl-based binder. When the alkali metal is included within the above range, the coating layer can have desired or improved bonding strength, and a separator including the same can exhibit desired or improved heat resistance, air permeability, and oxidation resistance.

The (meth)acryl-based binder may be in various forms, such as an alternating polymer in which the units are alternately distributed, a random polymer in which the units are randomly distributed, or a graft polymer in which some structural units are grafted.

The (meth)acryl-based binder may have a weight average molecular weight ranging from 100,000 g/mol to 1,000,000 g/mol, from 100,000 g/mol to 500,000 g/mol, from 100,000 g/mol to 150,000 g/mol, from 200,000 g/mol to 130,000 g/mol, or from 300,000 g/mol to 900,000 g/mol. When the weight average molecular weight of the (meth)acryl-based binder satisfies the above range, a desired or improved bonding strength and low resistance may be exhibited. The weight average molecular weight may be a polystyrene-converted average molecular weight measured using gel permeation chromatography.

The (meth)acryl-based binder may be prepared by a solution polymerization method.

According to one example embodiment, the (meth)acryl-based binder may be contained in the coating layer of the separator in the form of a film.

The filler includes a filler having a particle diameter D50 ranging from 250 nm to 350 nm. When the particle diameter D50 of the filler is 250 nm or more, the separator provides desired or improved coating density and air permeability and the membrane resistance reduction effect of the (meth)acryl-based binder may not be reduced. When the particle diameter of the filler is 350 nm or less, the heat shrinkage rate of the separator is not high, and thus the heat resistance of the separator may increase. For example, the filler may have a particle diameter D50 ranging from 250 nm to 300 nm.

According to one example embodiment, the filler may include a filler having a particle diameter D50 ranging from 250 nm to 350 nm in an amount of 95 wt% or more, for example, ranging from 95 wt% to 100 wt%, or 100 wt%.

The filler may be or include, for example, at least one of an inorganic filler, an organic filler, an organic-inorganic composite filler, or a combination thereof. The inorganic filler may be a ceramic material that can increase heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include at least one of an acrylic compound, an imide compound, an amide compound, or a combination thereof, but is not limited thereto. The organic filler may have a core-shell structure, but is not limited thereto. For example, the filler is an inorganic filler and may be a ceramic material such as, e.g., boehmite.

The filler may be plate-shaped. The plate-shaped filler can readily implement the effects of the separator when combined with the (meth)acryl-based binder.

The filler may be included in the heat-resistant layer in a desired content with respect to the binder, for example, the (meth)acryl-based binder. According to one example embodiment, the (meth)acryl-based binder and the filler may be included in a mass ratio of 1:10 to 1:50, for example, 1:20 to 1:30, or 1:25 to 1:30. Within the above range, it is possible to achieve heat resistance, durability and low resistance effects.

The filler may be contained in an amount ranging from 50 wt% to 99 wt%, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, or for example, from 95 wt% to 99 wt% of the total amount of the coating layer. When the filler is included within the above range, the separator may exhibit desired or improved heat resistance, durability, oxidation resistance, and stability.

The adhesive binder may be configured to secure the bonding strength with the electrode of the separator. Since heat resistance and bonding strength are physical properties that have a trade-off relationship, in one example embodiment, the coating layer may further include the adhesive binder together with the (meth)acryl-based binder so that the (meth)acryl-based binder and the adhesive binder are each independently present in the coating layer, thereby implementing a separator with desired or improved heat resistance and bonding strength.

The adhesive binder can maintain the heat resistance and bonding strength of the separator and increase the stability and lifetime of a battery and also reduce the resistance of the battery when included in a subsequent battery.

The adhesive binder may be cross-linked. According to one example embodiment, the adhesive binder is a cross-linked (meth)acryl-based adhesive binder and may be a cross-linked (meth)acrylate-based polymer or copolymer. For example, the adhesive binder may include a cross-linked polymethyl (meth)acrylate-based polymer.

To prepare the cross-linked (meth)acryl-based polymer, a cross-linking agent may be further added during a polymerization process.

The (meth)acryl-based adhesive binder may have a glass transition temperature ranging from 50 °C to 110 °C. Within the above range, not only the bonding strength to the electrode tab can be desired or improved, but also ionic conductivity can be satisfactory.

According to one example embodiment, the adhesive binder is a cross-linked adhesive binder and may be a mixture of two types of cross-linked (meth)acryl-based adhesive binders having different degrees of swelling. For example, the adhesive binder may be a mixture of a first (meth)acryl-based adhesive binder having a degree of swelling ranging from 100% to 200% and a second (meth)acryl-based adhesive binder having a degree of swelling ranging from 1000% to 1500%. The first (meth)acryl-based binder and the second (meth)acryl-based binder may be included in a part by weight ratio of 20 to 80 : 80 to 20 among a total of 100 parts by weight of the adhesive binder. The first (meth)acryl-based binder can increase the wet bonding strength of the separator, and the second (meth)acryl-based binder can increase dry bonding strength.

Herein, the "degree of swelling" may be measured by the following method.

Samples were manufactured by putting a predetermined amount of adhesive binder into a laboratory dish, drying the same on a horizontal support, and then cutting the same into a size of 1 cm×1cm. After measuring a weight (1) of the cut sample, the sample was put into a glass bottle. In a dry room or a glove box, an amount of electrolyte to sufficiently immerse the sample in the glass bottle was added, and the sample was left in an oven at 70 °C for 72 hours and then taken out of the glass bottle. The electrolyte on the outside of the sample was wiped off using a paper towel, and a weight (2) of the sample was measured. A swelling degree measurement value in the electrolyte is calculated according to the following equation. Here, the electrolyte is a solution in which 1.3M $LiPF_6$, which is a supporting electrolyte, is dissolved in a mixed solvent of ethylene carbonate (EC)/ethyl methyl carbonate (EMC)/diethyl carbonate (DEC) in a volume ratio of 3/5/2.

$$\text{Degree of swelling} = ((2) - (1)) / (1) \times 100$$

The degree of swelling of the (meth)acryl-based binder may be adjusted by selecting the type and content of monomers for preparing a binder in consideration of a solubility parameter (SP) value of an electrolyte.

The adhesive binder may be contained in an amount ranging from 1 wt% to 20 wt%, for example, 5 to 20 wt%, for example, 5 to 15 wt% with respect to the total amount of the coating layer. Within the above range, bonding strength to the electrode can be exhibited, and battery resistance does not increase, and thus there may be no limitation in capacity implementation.

The coating layer may have a thickness ranging from 0.01 μm to 20 μm, and within the above range, have a thickness ranging from 0.01 μm to 5 μm, 0.1 μm to 3 μm, or 0.1 μm to 1.5 μm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator can exhibit desired or improved air permeability, heat resistance, bonding strength, etc. Herein, "thickness of the coating layer" is a thickness of one coating layer when the coating layer is formed on only one surface of the porous substrate and is a thickness of two coating layers when the coating layer is formed on both surfaces of the porous substrate.

**Porous substrate**

The porous substrate may be a substrate having multiple pores and may be commonly included in electrochemical devices. The porous substrate may be a polymer membrane formed of any one polymer such as or including at least one of a polyolefin such as polyethylene or polypropylene, polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have an desired or improved shutdown function, thereby contributing to increasing the safety of the battery. The polyolefin-based substrate may be at least one of, for example, a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin, a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

A separator for a rechargeable lithium battery according to one example embodiment may be manufactured by forming a heat-resistant layer by applying a composition for forming a heat-resistant layer on one or both surfaces of a porous substrate, and drying and curing the same and forming an adhesive layer by applying an adhesive binder or a

composition including the adhesive binder on the heat-resistant layer, and drying and curing the same. The curing may be performed using conventional methods known to those skilled in the art.

FIG. 1 is a cross-sectional view illustrating a separator for a rechargeable lithium battery, according to one example embodiment. Referring to FIG. 1, the separator for a rechargeable lithium battery includes a porous substrate 1 and a coating layer 2 located on both surfaces of the porous substrate 1. The coating layer 2 may include a heat-resistant layer 5 including a (meth)acryl-based binder 4 and a filler 3, and an adhesive layer 7 located on the heat-resistant layer 5,the adhesive layer 7 including an adhesive binder 6.

According to one example embodiment, a thickness of the heat-resistant layer may range from 0.5 μm to 5 μm, for example, from 0.7 μm to 3.0 μm, or from 1.5 μm to 2 μm. A thickness of the adhesive layer may range from 0.5 μm to 5 μm, for example, from 1.0 μm to 2.0 μm.

Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be positioned between the positive electrode and the negative electrode.

Positive electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is at least one of Ni, Co, Mn, or a combination thereof; X is at least one of Al, Ni, Co, Mn, Cr, Fe, Mg, Sr, V, a rare earth element or a combination thereof; D is at least one of O, F, S, P, or a combination thereof; G is at least one of Al, Cr, Mn, Fe, Mg, La, Ce, Sr, V, or a combination thereof; and $L^1$ is at least one of Mn, Al, or a combination thereof.

The positive electrode active material may be or include, for example, a high nickel-based positive electrode active material having a nickel content that is greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be 90 wt% to 99.5 wt% based on 100 wt% of the positive electrode active material layer. Amounts of the binder and the conductive material may be 0.5 wt% to 5 wt%, respectively, based on 100 wt% of the positive electrode active material layer.

The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, etc., in a form of a metal powder or a metal fiber; a conductive polymer such as or including a polyphenylene derivative; or a mixture thereof.

Al may be included as the current collector, but is not limited thereto.

Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be at least one of a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be at least one of a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other, and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol

resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be a polymer material that is capable of being fibrous. For example, the dry binder may be at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, etc. in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

## Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be included alone or in combination of two or more.

In addition, when using a carbonate-based solvent, a cyclic carbonate and a chain carbonate may be mixed, and the cyclic carbonate and the chain carbonate may be mixed in a volume ratio of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 2. In FIG. 3, the rechargeable lithium battery 100 may include a positive lead tab 11, a positive terminal 12, a negative lead tab 21, and a negative terminal 22. As illustrated in FIGS. 4 and 5, the rechargeable lithium battery 100 may include an electrode tab 70 illustrated in FIG. 5, or, for example, a positive electrode tab 71 and a negative

electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely example embodiments of the present disclosure, and the present disclosure is not limited to the following examples.

**Preparation Example 1**

In a 3 L four-necked separable flask provided with a stirrer, a thermometer, and a cooling tube, distilled water (1249.72 g), a 20% aqueous lithium hydroxide solution (203.69 g, 1.05 equivalents with respect to the total amount of acrylic acid and 2-methylpropane sulfonic acid), acrylic acid (AA, 21.60 g, 0.30 mol), 2-hydroxyethyl methacrylate (HEMA, 13.00 g, 0.10 mol), 2-acrylamido-2-methylpropane sulfonic acid (AMPS, 124.30 g, 0.6 mol), and ammonium persulfate (0.2 g, 0.001 mol) were added, then a process of reducing an internal pressure to 10 mmHg using a diaphragm pump, and returning the internal pressure to a normal pressure using nitrogen was repeated three times.

The reaction was carried out for 12 hours while controlling the temperature of the reaction solution to be stable between 65 °C and 70 °C.

After cooling to room temperature, a non-volatile component (NV) in 10 mL of the reaction solution was measured, and the measurement result was 9.8 wt% (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 30:10:60.

**Preparation Example 2**

An acryl-based copolymer was prepared in the same manner as in Preparation Example 1, with a difference that acrylic acid (28.80 g, 0.40 mol), 2-hydroxyethyl methacrylate (HEMA, 13.00 g, 0.10 mol), and 2-acrylamido-2-methylpropane sulfonic acid (103.60 g, 0.5 mol) were used.

The non-volatile component of the reaction solution was 9.7 % (theoretical value: 10%). In addition, in the poly(acrylic acid-co-2-hydroxyethyl methacrylate-co-2-acrylamido-2-methylpropane sulfonic acid) lithium salt acquired here, a molar ratio of the first structural unit derived from acrylic acid, the second structural unit derived from 2-hydroxyethyl methacrylate, and the third structural unit derived from 2-acrylamido-2-methylpropane sulfonic acid was 40:10:50.

**Preparation Example 3**

An acryl-based binder was prepared in the same manner as in Preparation Example 1, with a difference that acrylic acid and 2-hydroxyethyl methacrylate were used and 2-acrylamido-2-methylpropane sulfonic acid was not used. A molar ratio of acrylic acid lithium salt and 2-hydroxyethyl methacrylate was 42:58. The non-volatile component of the reaction solution was 9.0 wt% (theoretical value: 10%).

**Preparation Example 4**

An acryl-based binder was prepared in the same manner as in Preparation Example 1, with a difference that acrylic acid and 2-acrylamido-2-methylpropane sulfonic acid were used and 2-hydroxyethyl methacrylate was not used. The acrylic acid lithium salt and the 2-acrylamido-2-methylpropane sulfonic acid lithium salt were included in a molar ratio of 74:26. The non-volatile component of the reaction solution was 9.0 wt% (theoretical value: 10%).

**Preparation Example 5**

An acryl-based binder was prepared in the same manner as in Preparation Example 1, with a difference that 2-hydroxyethyl methacrylate and 2-acrylamido-2-methylpropane sulfonic acid were used and acrylic acid was not used. The 2-hydroxyethyl methacrylate and the 2-acrylamido-2-methylpropane sulfonic acid lithium salt were included in a molar ratio of 74:26. The non-volatile component of the reaction solution was 9.0 wt% (theoretical value: 10%).

Table 1 below illustrates the molar ratio of each monomer in the (meth)acryl-based binders prepared in Preparation Examples 1 to 5.

Table 1:

| | Molar ratio of monomers | | |
|---|---|---|---|
| | AA | HEMA | AMPS |
| Preparation Example 1 | 30 | 10 | 60 |
| Preparation Example 2 | 40 | 10 | 50 |
| Preparation Example 3 | 42 | 58 | 0 |
| Preparation Example 4 | 74 | 0 | 26 |
| Preparation Example 5 | 0 | 74 | 26 |

**Example 1**

A dispersion was prepared by mixing the (meth)acryl-based binder (10 wt% in distilled water) prepared in Preparation Example 1 and boehmite (particle diameter D50 measured by a laser diffraction method: 300 nm, plate-shaped, Eston's BG200) as a filler in a mass ratio of 1:28 (the (meth)acryl-based binder and the filler are 1 part by weight and 28 parts by weight) based on solid content, adding the mixture to a water solvent, and then milling and dispersing the same at 25 °C for 30 minutes using a bead mill. A composition for forming a heat-resistant layer was prepared by adding water to the dispersion so that the total solid content was 20 wt%.

Heat-resistant layers were formed by coating both surfaces of a polyethylene-based film (thickness: 5.5 μm, CZMZ Company, air permeability: 110 sec/100 cc, and puncture strength: 360 kgf) as a porous substrate with the composition for forming a heat-resistant layer using a die coating method and then drying the same in an oven at 70 °C for 10 minutes.

A separator for a rechargeable lithium battery was manufactured by diluting a cross-linked polymethyl (meth) acrylate polymer (cross-linked PMMA, SP-189, ZEON) as an adhesive binder to a concentration of 2 wt% solid content, then coating one surface of each heat-resistant layer with the above polymer to 0.5 μm in a loading amount of 0.5 g/$m^2$, and then drying the same at 50 °C for 10 minutes to form adhesive layers with a total thickness of 1.0 μm. A thickness of the coating layer of the separator was 3 μm, and the coating loading amount was 3.6 g/$m^2$.

**Example 2**

A binder solution was prepared by adding 5 wt% first (meth)acryl-based particulate binder (cross-linked, degree of swelling: 180%) to distilled water and stirring the same at room temperature for 3 hours using a stirrer. A binder solution was prepared by adding 5 wt% second (meth)acryl-based particulate binder (cross-linked, degree of swelling: 1150%) to distilled water and stirring the same at room temperature for 3 hours using the stirrer. An adhesive binder solution was prepared by mixing the two prepared binder solutions in a weight ratio of 5:5.

A separator for a rechargeable lithium battery was manufactured in the same manner as in Example 1, with a difference that in Example 1, the prepared adhesive binder solution was used as the adhesive binder.

**Example 3**

A separator for a rechargeable lithium battery was manufactured in the same manner as in Example 1, with a difference that in Example 1, the (meth)acryl-based binder prepared in Preparation Example 2 was used instead of the (meth)acryl-based binder prepared in Preparation Example 1.

**Example 4**

A separator for a rechargeable lithium battery was manufactured in the same manner as in Example 1, with a difference that in Example 1, boehmite (particle diameter D50: 250 nm, plate-shaped, Eston) was used as the filler.

**Example 5**

A separator for a rechargeable lithium battery was manufactured in the same manner as in Example 1, with a difference that in Example 1, boehmite (particle diameter D50: 350 nm, plate-shaped, Eston) was used as the filler.

**Comparative Example 1**

A separator for a rechargeable lithium battery was manufactured in the same manner as in Example 1, with a difference that in Example 1, the (meth)acryl-based binder prepared in Preparation Example 3 was used instead of the (meth)acryl-based binder prepared in Preparation Example 1.

**Comparative Example 2**

A separator for a rechargeable lithium battery was manufactured in the same manner as in Example 1, with a difference that in Example 1, the (meth)acryl-based binder prepared in Preparation Example 4 was used instead of the (meth)acryl-based binder prepared in Preparation Example 1.

**Comparative Example 3**

A separator for a rechargeable lithium battery was manufactured in the same manner as in Example 1, with a difference that in Example 1, the (meth)acryl-based binder prepared in Preparation Example 5 was used instead of the (meth)acryl-based binder prepared in Preparation Example 1.

**Comparative Example 4**

A separator for a rechargeable lithium battery was manufactured in the same manner as in Example 1, with a difference that in Example 1, boehmite (particle diameter D50: 50 nm, plate-shaped, Eston) was used as the filler.

**Comparative Example 5**

A separator for a rechargeable lithium battery was manufactured in the same manner as in Example 1, with a difference that in Example 1, boehmite (particle diameter D50: 400 nm, plate-shaped, Eston) was used as the filler.

**Manufacture of battery**

A negative electrode was manufactured according to the following process.

A slurry for a negative electrode active material was prepared by mixing 97 wt% graphite particles with an average particle diameter of 25 μm, 1.5 wt% styrene-butadiene rubber (SBR) binder, and 1.5 wt% carboxymethyl cellulose (CMC), adding the mixture to distilled water, and stirring the same for 60 minutes using a mechanical stirrer. A negative electrode was manufactured by applying the slurry on a 10 μm thick copper current collector using a doctor blade, drying the same in a hot air dryer at 100 °C for 0.5 hours, and then re-drying and roll-pressing the same for 4 hours under vacuum and 120 °C conditions.

Manufacture of positive electrode:

Separately from the above, a positive electrode was manufactured according to the following process.

A slurry for a positive electrode active material was prepared by mixing 97 wt% $LiCoO_2$, 1.5 wt% carbon black powder as a conductive material, and 1.5 wt% polyvinylidene fluoride (PVDF), adding the mixture to N-methyl-2-pyrrolidone solvent, and then stirring the same for 30 minutes using a mechanical stirrer. A positive electrode was manufactured by applying the slurry on a 20 μm thick aluminum current collector using a doctor blade, drying the same in a hot air dryer at 100 °C for 0.5 hours, and then re-drying and roll-pressing the same for 4 hours under vacuum and 120 °C conditions.

Electrode assembly jelly roll:

An electrode assembly jelly roll was manufactured by interposing each of the separators obtained according to the Examples and Comparative Examples between the manufactured positive electrode and negative electrode and winding the same. The jelly roll was inserted into a pouch, an electrolyte was injected therein, and the pouch was vacuum sealed. As the electrolyte, a solution in which 1.3M $LiPF_6$ was dissolved in a mixed solvent of ethylene carbonate (EC), ethyl methyl carbonate (EMC), and diethyl carbonate (DEC) in a volume ratio of 3:5:2 was used. A rechargeable lithium battery was manufactured by pressing the jelly roll at a temperature of 80 °C for 3 minutes while applying a pressure of 11.7 $kgf/cm^2$ to the jelly roll inserted into the pouch.

**Heat shrinkage rate after being left at 150 °C for 1 hour (units: %)**

Samples were manufactured by cutting the separators for a rechargeable lithium battery of the Examples and the Comparative Examples to a size of 8 cm×8 cm. A shrinkage rate in each of a machine direction (MD) and a transverse direction (TD) was calculated by drawing a square with a size of 5 cm×5 cm on surfaces of the samples, then putting the same between pieces of paper or alumina powder, leaving the same in an oven at 150 °C for 1 hour, taking the sample out, and then measuring the side dimensions of the drawn square. The shrinkage rate was calculated according to Equation 1 below.

Equation 1:

$$\text{Shrinkage rate} = (L0 - L1) / L0 \times 100$$

In Equation 1, L0 denotes an initial length of the separator, and L1 denotes a length of the separator after being left at 150 °C for 1 hour.

**Coating density (units: g/cm$^3$)**

Before forming the heat-resistant layer and the adhesive layer, a thickness "a" and a unit weight "b" of the porous substrate with a size of 10 cm×10 cm were measured. After forming the heat-resistant layer and the adhesive layer, a coating thickness "e" and a coating weight "f" were calculated by measuring a total thickness "c" and a unit weight "d." A coating density was calculated by dividing the coating weight by the coating thickness.

Coating thickness (e) = c - a
Coating weight (f) = d - b
Coating density = f / e
Air permeability (units: sec/100 cc)

For the manufactured separators, air permeability was measured by a method of measuring the time (units: seconds) it took for 100 cc of air to pass through the separator using a measurement device (EG01-55-1MR, Asahi Seiko).

Air permeability measurement device setting conditions:

Measurement pressure: 0.5 kg/cm$^2$, cylinder pressure: 2.5 kg/cm$^2$, set time: 10 seconds

**Wet bonding strength (units: gf/mm)**

The separator was attached to the positive electrode (manufactured in the same manner as in the manufacture of the battery) and then inserted into a pouch, an electrolyte (solution in which 1.3M $LiPF_6$ was dissolved in the mixed solvent of ethylene carbonate (EC)/ethyl methyl carbonate (EMC)/diethyl carbonate (DEC) in a volume ratio of 3/5/2) was injected, and the same was left for 12 hours, then pressed under conditions of a pressure ranging from 10 to 20 kgf/cm$^2$, a temperature ranging from 70 °C to 90 °C, and a time ranging from 5 to 20 seconds, and then disassembled. After the separator and the positive electrode were taken out of the pouch, the positive electrode and the separator were unfolded 180° and a force required to separate the positive electrode from the separator was measured using a tension measurement device (Tinius Olsen, HT400).

**Dry bonding strength (units: gf/mm)**

Each of the separators of the Examples and the Comparative Examples was attached to the positive electrode (manufactured in the same manner as in the manufacture of the battery) and then inserted into a pouch, and the separator and the positive electrode were pressed under the conditions of a pressure ranging from 10 to 20 kgf/cm$^2$, a temperature ranging from 70 °C to 90 °C, and the time ranging from 5 to 20 seconds and then disassembled. After the separator and the positive electrode were taken out of the pouch, the separator was unfolded 180° and a force required to separate the positive electrode from the separator was measured using a tension measurement device (Tinius Olsen, HT400).

**Membrane resistance (units: Ω)**

Membrane resistance was evaluated by electrochemical impedance spectroscopy (EIS) resistance. Test cells were manufactured by impregnating the separators manufactured in the Examples and Comparative Examples with an

electrolyte in which 1.5M $LiPF_6$ was dissolved in a mixed solvent of ethylene carbonate, ethyl methyl carbonate, and dimethyl carbonate (2/1/7 volume ratio), inserting the same into a lead tab-attached aluminum foil electrode, and sealing the same in an aluminum pack, and the resistance (Ω) of these test cells was measured by an AC impedance method (measurement frequency: 100 kHz) at 20 °C.

Table 2:

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Binder | | Preparation Example 1 | Preparation Example 1 | Preparation Example 2 | Preparation Example 1 | Preparation Example 1 | Preparation Example 3 | Preparation Example 4 | Preparation Example 5 | Preparation Example 1 | Preparation Example 1 |
| Filler | Shape | Plate-shaped | Plate-shaped | Plate-shaped | Plate-shaped | Plate-shaped | Plate-shaped | Plate-shaped | Plate-shaped | Plate-shaped | Plate-shaped |
| | D50 | 300 | 300 | 300 | 250 | 350 | 300 | 300 | 300 | 50 | 400 |
| Binder filler | | 1:28 | 1:28 | 1:28 | 1:28 | 1:28 | 1:28 | 1:28 | 1:28 | 1:28 | 1:28 |
| Adhesive binder | Type | Cross-linking PMMA | Two types of acrylate | Cross-linking PMMA | Cross-linking PMMA | Cross-linking PMMA | Cross-linking PMMA | Cross-linking PMMA | Cross-linking PMMA | Cross-linking PMMA | Cross-linking PMMA |
| Coating density | | 1.07 | 1.07 | 1.07 | 1.1 | 1.03 | 1.07 | 1.07 | 1.07 | 1.5 | 0.85 |
| Air permeability | | 162 | 163 | 163 | 165 | 162 | 165 | 165 | 165 | 220 | 153 |
| Heat shrinkage rate (MD/TD) | | 3/3 | 3/3 | 3/3 | 3/3 | 3/3 | 7/7 | 7/7 | 7/7 | 3/3 | 15/15 |
| Dry bonding strength | | 0.8 | 0.8 | 0.8 | 0.8 | 0.8 | 0.8 | 0.7 | 0.8 | 0.8 | 0.7 |
| Wet bonding strength | | 0.85 | 0.9 | 0.81 | 0.84 | 0.82 | 0.78 | 0.7 | 0.7 | 0.8 | 0.7 |
| Membrane resistance | | 0.81 | 0.8 | 0.82 | 0.81 | 0.82 | 1.23 | 1.32 | 1.34 | 1.45 | 0.72 |

As illustrated in Table 2, the separators of the Examples have low membrane resistance and a low heat shrinkage rate, and can provide desired or improved air permeability.

On the other hand, the separators of Comparative Examples 1 to 3 have high membrane resistance. The separator of Comparative Example 4 not only has high membrane resistance but also poor air permeability. The separator of Comparative Example 5 has a high heat shrinkage rate due to a low coating density.

A separator for a rechargeable lithium battery according to one example embodiment can exhibit low membrane resistance, desired or improved air permeability, and a low heat shrinkage rate, thereby increasing the capability, stability, and lifetime of the battery.

## Claims

1. A separator (30) for a rechargeable lithium battery (100), the separator (30) comprising:

   a porous substrate (1); and
   a coating layer (2) located on at least one surface of the porous substrate (1),
   wherein the coating layer (2) includes a heat-resistant layer including a binder and a filler (3), and an adhesive layer located on the heat-resistant layer and including an adhesive binder,
   the binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof,
   the filler includes a filler (3) having a particle diameter D50 ranging from 250 nm to 350 nm measured by a laser diffraction method, and
   the adhesive binder includes a cross-linked (meth)acryl-based adhesive binder.

2. The separator (30) of claim 1, wherein the (meth)acryl-based binder and the filler are included in a mass ratio in a range of 1:10 to 1:50.

3. The separator (30) of claim 1 or 2, wherein the filler (3) comprises plate-shaped boehmite.

4. The separator (30) of any one of the preceding claims, wherein the first structural unit is represented by at least one of Chemical Formula 1, 2, and 3:

   Chemical Formula 1: Chemical Formula 2: Chemical Formula 3:

   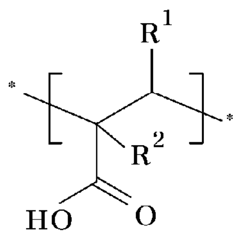 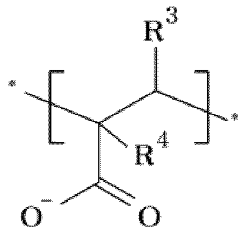 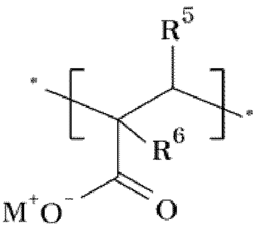 ,

   the second structural unit is represented by Chemical Formula 4:

Chemical Formula 4:

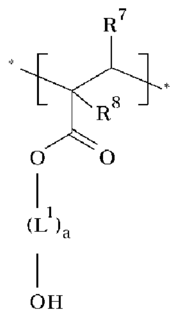

,

the third structural unit is represented by at least one of Chemical Formula 5, 6, and 7:

Chemical Formula 5: Chemical Formula 6: Chemical Formula 7:

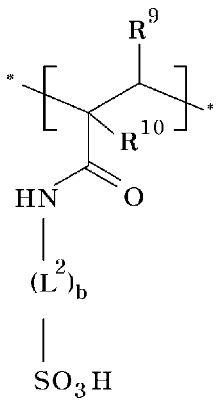

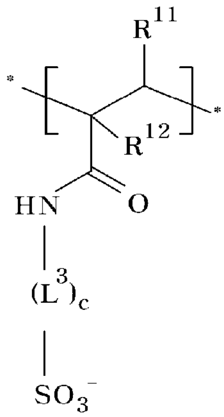

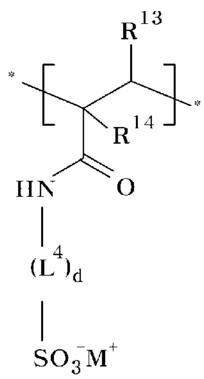

,

in Chemical Formulas 1 to 7,

$R^1$ to $R^{14}$ each independently comprises hydrogen or a C1 to C10 alkyl group,

$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,

a, b, c, and d are each independently an integer ranging from 0 to 2, and

M comprises an alkali metal,

wherein "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**5.** The separator (30) of any one of the preceding claims, wherein the (meth)acryl-based binder is represented by Chemical Formula 8:

Chemical Formula 8:

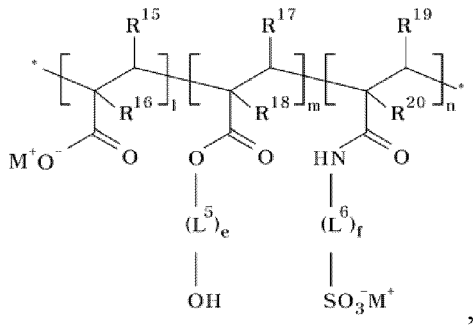

in Chemical Formula 8,

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M comprises an alkali metal, and
l, m, and n are a molar ratio of each unit, and l+m+n=1,
e and f are each independently an integer ranging from 0 to 2,
wherein "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**6.** The separator (30) of any one of the preceding claims, wherein, with respect to 100 mol% of the (meth)acryl-based binder, the first structural unit is included in an amount ranging from 30 mol% to 65 mol%, the second structural unit is included in an amount ranging from 1 mol% to 20 mol%, and the third structural unit is included in an amount ranging from 20 mol% to 65 mol%.

**7.** The separator (30) of any one of the preceding claims, wherein, with respect to 100 mol% of the (meth)acryl-based binder, a total of the first structural unit, the second structural unit, and the third structural unit is in a range of 95 mol% or more.

**8.** The separator (30) of any one of the preceding claims, wherein the adhesive binder comprises a cross-linked polymethyl (meth)acrylate-based binder.

**9.** The separator (30) of any one of the preceding claims, wherein the adhesive binder comprises a mixture of two types of (meth)acryl-based adhesive binders having different degrees of swelling.

**10.** The separator (30) of claim 9, wherein the adhesive binder is a mixture of a first (meth)acryl-based adhesive binder having a degree of swelling ranging from 100 % to 200%, and a second (meth)acryl-based adhesive binder having a degree of swelling ranging from 1000 % to 1500%.

**11.** The separator (30) of claim 10, wherein the first (meth)acryl-based adhesive binder and the second (meth)acryl-based

adhesive binder are included in a part by weight ratio of 20 to 80: 80 to 20 of a total of 100 parts by weight of the adhesive binder.

**12.** The separator (30) of any one of the preceding claims, wherein the adhesive binder is included in an amount ranging from 1 wt% to 20 wt% with respect to a total amount of the coating layer.

**13.** The separator (30) of any one of the preceding claims, wherein the coating layer has a thickness ranging from 0.01 μm to 20 μm.

**14.** A rechargeable lithium battery (100) comprising:

a positive electrode (10);
a negative electrode (20); and
the separator (30) of any one of the preceding claims located between the positive electrode (10) and the negative electrode (20).

FIG 1.

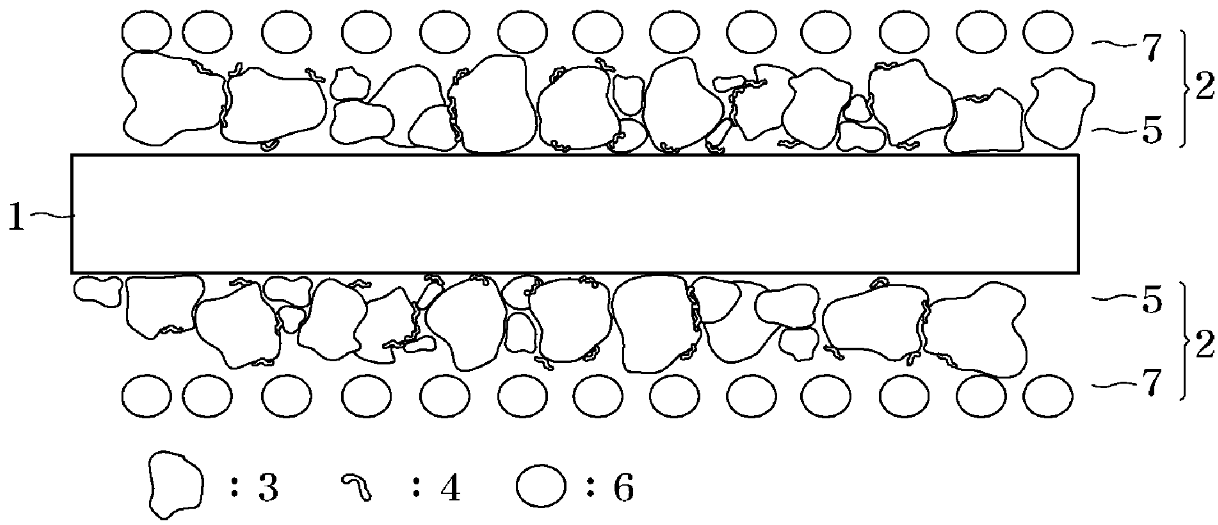

**FIG 2.**

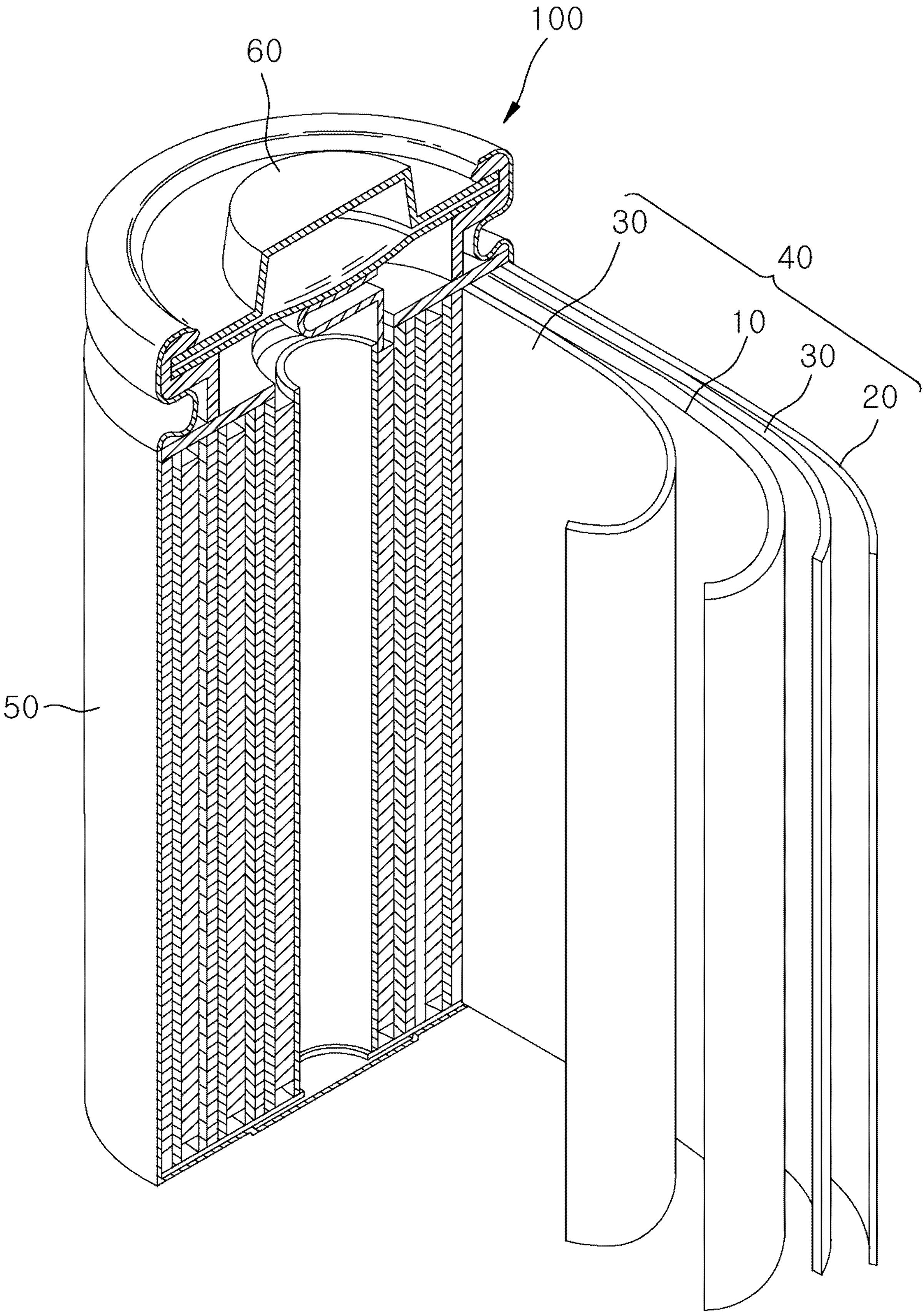

FIG 3.

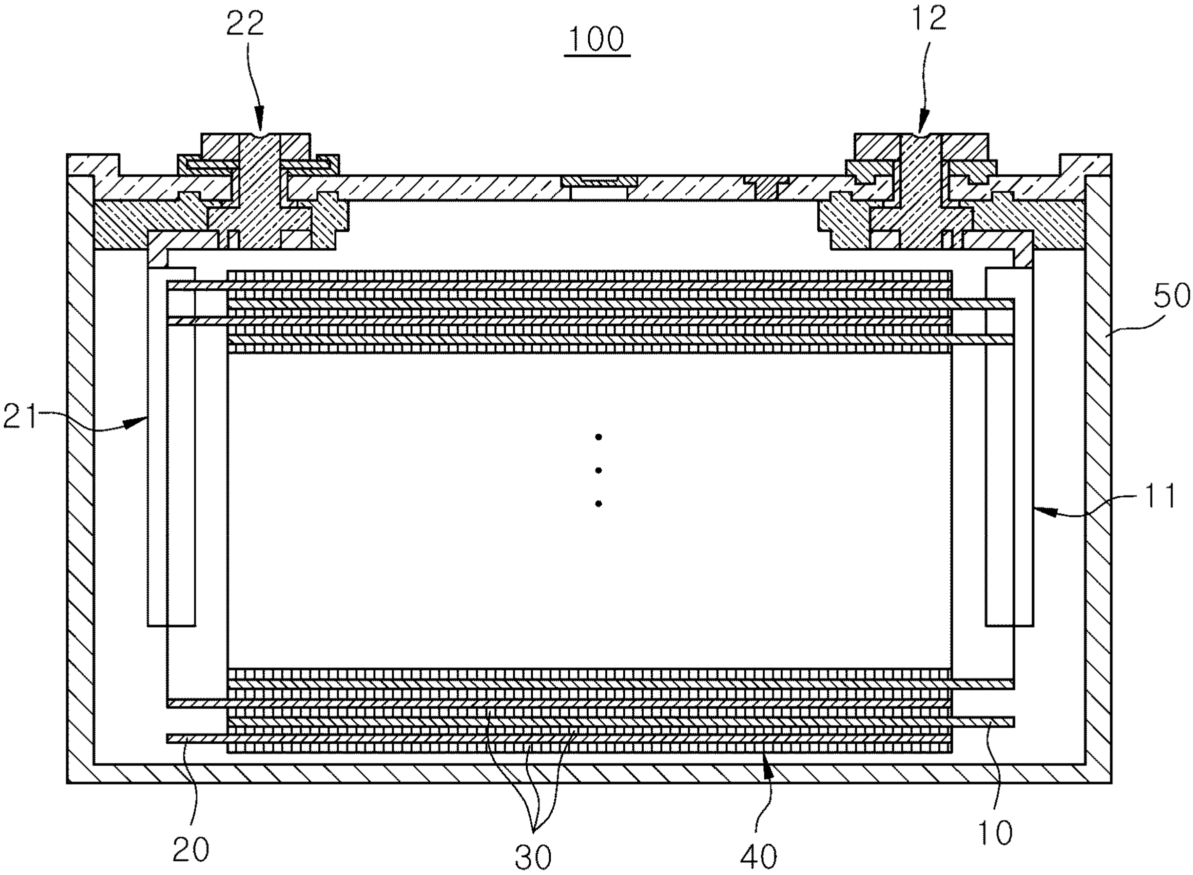

FIG 4.

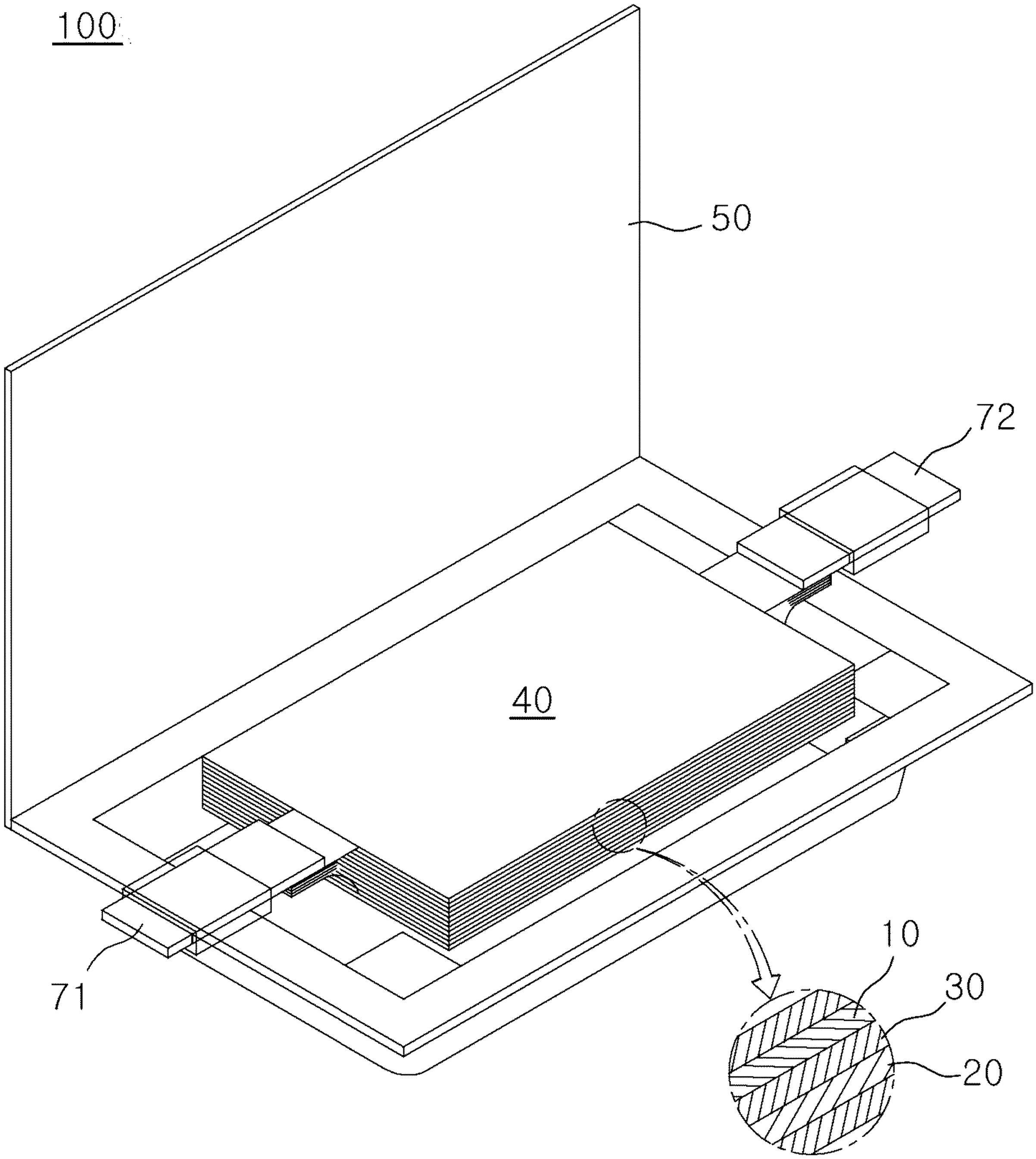

FIG 5.

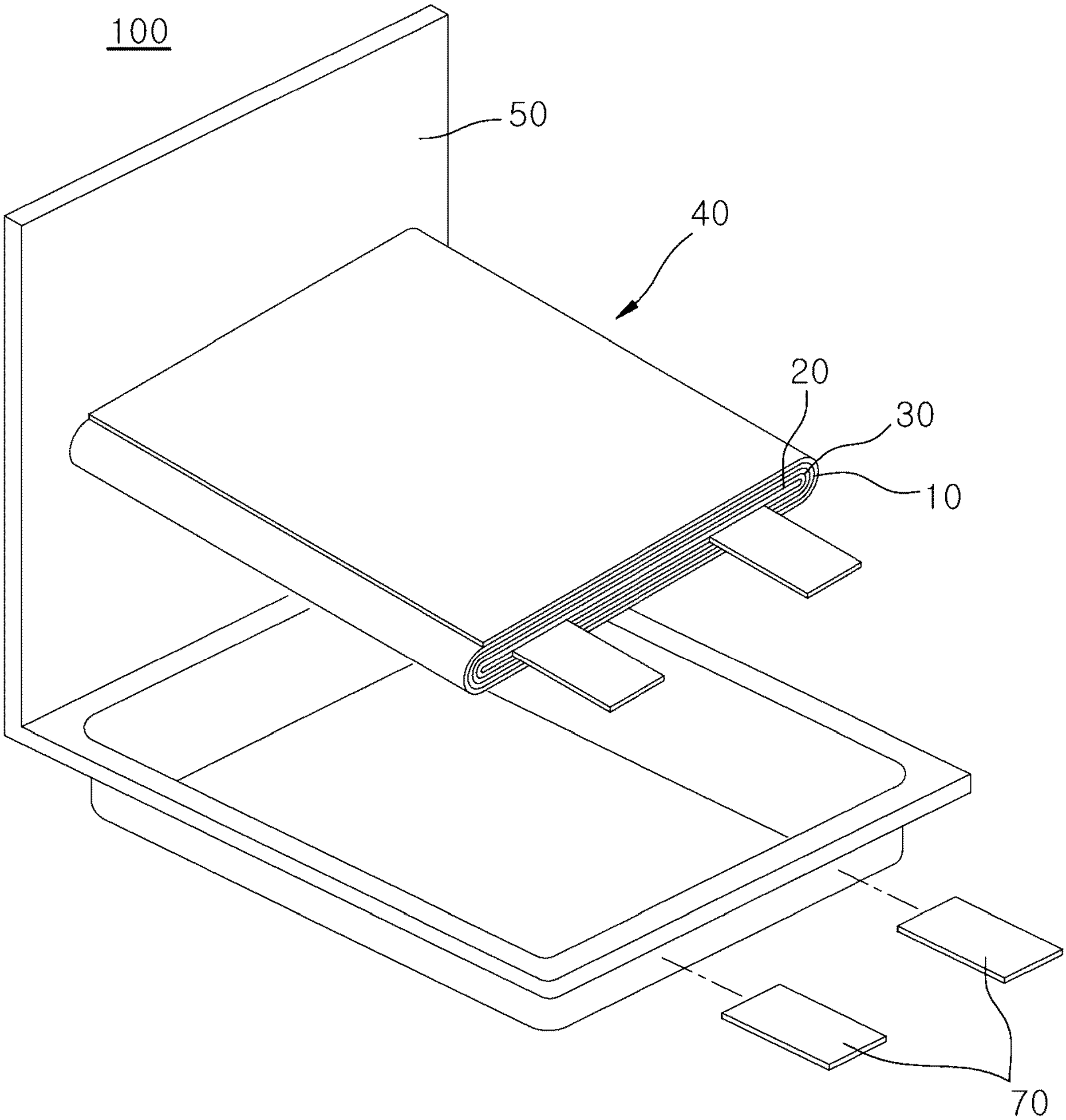

Europäisches Patentamt
European Patent Office
Office européen des brevets

# EUROPEAN SEARCH REPORT

Application Number
EP 25 16 8304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 3 905 381 A1 (SAMSUNG SDI CO LTD [KR])<br>3 November 2021 (2021-11-03)<br>* paragraphs [0009], [0015], [0023], [0025], [0035], [0041], [0068], [0071], [0081], [0088]-[0089], [0091], [0093]-[0094], [0096]-[0097], [0114]-[0115];<br>claims 1, 3, 7, 16 *<br>----- | 1-14<br><br>1-14 | INV.<br>H01M50/42<br>C08F220/06<br>C08K3/00<br>C09D7/61<br>H01M50/434<br>H01M50/443<br>H01M50/451 |
| Y | WO 2023/189442 A1 (ZEON CORP [JP])<br>5 October 2023 (2023-10-05)<br>* the whole document *<br>-& EP 4 503 300 A1 (ZEON CORP [JP])<br>5 February 2025 (2025-02-05)<br>* paragraphs [0093], [0104], [0117], [0151] *<br>----- | 1-14 | ADD.<br>H01M10/0525 |

TECHNICAL FIELDS SEARCHED (IPC)

H01M
C08F
C09G
C08K
C09D

The present search report has been drawn up for all claims

| Place of search | Date of completion of the search | Examiner |
|---|---|---|
| The Hague | 7 August 2025 | Scarfiello, Canio |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 16 8304

This annex lists the patent family members relating to the patent documents cited in the above-mentioned European search report. The members are as contained in the European Patent Office EDP file on
The European Patent Office is in no way liable for these particulars which are merely given for the purpose of information.

07-08-2025

| Patent document cited in search report | Publication date | Patent family member(s) | Publication date |
|---|---|---|---|
| EP 3905381 A1 | 03-11-2021 | CN 113228397 A | 06-08-2021 |
| | | EP 3905381 A1 | 03-11-2021 |
| | | KR 20200082480 A | 08-07-2020 |
| | | US 2022029244 A1 | 27-01-2022 |
| | | US 2025158230 A1 | 15-05-2025 |
| | | WO 2020138628 A1 | 02-07-2020 |
| WO 2023189442 A1 | 05-10-2023 | CN 118843979 A | 25-10-2024 |
| | | EP 4503300 A1 | 05-02-2025 |
| | | JP WO2023189442 A1 | 05-10-2023 |
| | | KR 20240168947 A | 02-12-2024 |
| | | US 2025206976 A1 | 26-06-2025 |
| | | WO 2023189442 A1 | 05-10-2023 |
| EP 4503300 A1 | 05-02-2025 | CN 118843979 A | 25-10-2024 |
| | | EP 4503300 A1 | 05-02-2025 |
| | | JP WO2023189442 A1 | 05-10-2023 |
| | | KR 20240168947 A | 02-12-2024 |
| | | US 2025206976 A1 | 26-06-2025 |
| | | WO 2023189442 A1 | 05-10-2023 |

EPO FORM P0459

For more details about this annex : see Official Journal of the European Patent Office, No. 12/82